# EUROPEAN PATENT SPECIFICATION

(11) **EP 0 899 050 B1**
(45) Date of publication and mention of the grant of the patent: **04.12.2002**
(21) Application number: 98116426.2
(22) Date of filing: 31.08.1998
(51) Int. Cl.: B23K 20/16

(54) **Bonding method of dual phase stainless steel**
Verfahren zum Verbinden von rostfreiem Dualphasenstahl
Procédé pour joindre de l'acier inoxydable à deux phases

(30) Priority: 29.08.1997 JP 24955897; 11.05.1998 JP 12717698
(43) Date of publication of application: 03.03.1999
(73) Proprietor: DAIDO TOKUSHUKO KABUSHIKI KAISHA, Naka-ku Nagoya-shi Aichi-ken (JP)
(72) Inventor: Shimizu, Takao, Nagoya-shi, Aichi (JP); Horio, Hirotsugu, Toukai-shi, Aichi (JP); Yamamoto, Noboru, Nagoya-shi, Aichi (JP); Inagaki, Shigeyuki, Nagoya-shi, Aichi (JP); Suzuki, Hiroaki, Nagoya-shi, Aichi (JP); Tsuchiya, Masaki, Yokkaichi-shi, Mie (JP)
(74) Representative: Diehl, Hermann, Dr. Dipl.-Phys.

(56) References cited:
- EP-A- 0 847 826
- PATENT ABSTRACTS OF JAPAN vol. 018, no. 203 (M-1590), 11 April 1994 & JP 06 007967 A (SUMITOMO METAL IND LTD), 18 January 1994

## Description

The present invention relates to a dual phase stainless steel.

A ferritic/austenitic dual phase stainless steel (dual phase stainless hereunder) is made of increasing content of Cr, of decreasing Ni and of adding Mo etc., and by being solution treated to make dual phase characteristics of austenitic and of ferritic. The dual phase stainless steel is good at strength and toughness, and has good quality of stress corrosion cracking proof of inter-granular corrosion proof in comparison with the conventional austenitic stainless steel. Accordingly, it has wide application for oil environment and heat exchanger of sea water conversion.

The oil reservoir of an oil well stays a thousand meters underneath the ground. A dual phase stainless steel tube for tubing is used by way of connecting each piece of 10 to 15 meter length and putting them down a hole. As a method of connection, there exist ways of mechanical coupling, orbital welding and supposedly liquid phase bonding.

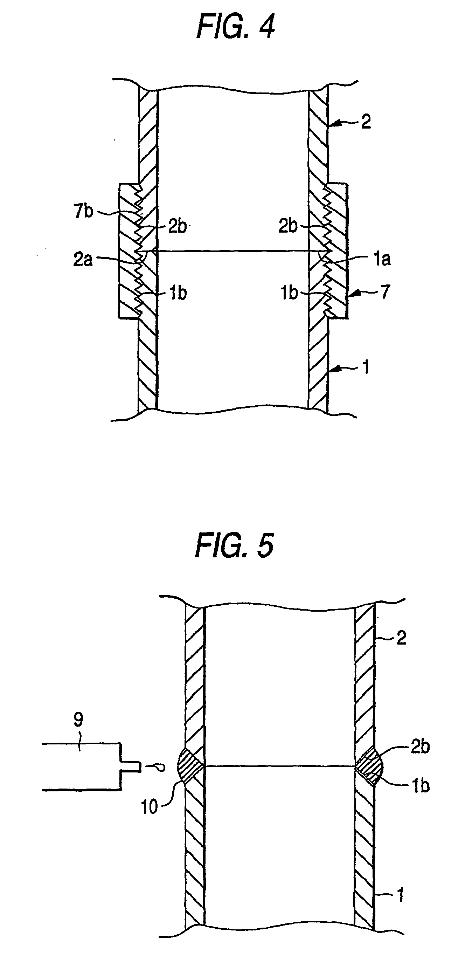

The mechanical coupling method, as shown in Fig. 4, makes a screw connection by putting together a fixed side of tubes (tube 1) which have been connected as a string of tubes underground and the other side of an upper movable piece (tube 2) by using external screw connector 7 which combines the outer threads of down side tube 1, and the outer threads of upper side tube by its internal threads. The bonding face of the down side tube 1a and of the upper side tube 2a contact together so that tube 1 and tube 2 are connected.

Mechanical coupling takes five to ten minutes to make one coupling and has a good productivity at connecting but it has the disadvantage of being the origin of oil and gas leakage at the connection. Therefore special care is required for precision machining of the external threads of tube 1 and tube 2, and for connector 7 together with a demand for high level skills of connection. The connected part is good for tensile strength but may have problems in comparison stress which may spread out in radiant direction of connector 7 and may accelerate the leakage of oil and gas. As is obvious, connector 7 has a larger outer diameter than tube 1 and 2, and therefore, a larger hole than the outer diameters of tube 1 and 2 is basically demanded.

In the welding method, shown in Fig. 5, at the top of tube 1 and bottom of tube 2, welding edges 1b and 2b are prepared and put together, and a welding torch 9 moves around the tube surface in circle to place a melted metal 10 on edges 1b and 2b. This way tube 1 and tube 2 are welded together.

Welding has the advantage that it does not cause leakage of oil and gas at the welded joint and that it is good at compression resistance as well as for tensile strength. Also, because no connector is used, the same hole diameter as of the tube is possible. However, in the welding method, the amount of welding cannot be too large. Accordingly, particularly, in the case of welding thick tubes, problems arise because the process is time-consuming. It may take as long as one to two hours to weld, and talented skill is also a prerequisite.

Liquid phase diffusion bonding works as follows; Putting an insert material between two steel tube cross sections, applying pressurising power longitudinally, heating and holding the temperature higher than the melting point of the insert material and lower than that of the tubes for some time period so that a part of the chemical composition spreads in atomic particle to both side tubes. The melting point of the residual of the insert material changes after the moving atoms have left, which means that the residual of the insert will solidify itself in the partly evacuated chemistry of insert by shifting its melting point higher than before.

Liquid phase diffusion bonding has certain similar characteristics as welding, in that leakage of oil and gas is no concern, compression resistance is good and the same bonded joint diameter as of external tube diameter is retained. It further provides a higher productivity than welding in processing one batch in about 30 minutes, and features high quality and efficiency. Therefore, liquid phase diffusion bonding is the most recommendable bonding method for joining oil tubes.

Liquid phase diffusion bonding is a well known technology. An example is Unexamined Japanese Patent Publication (kokai) No. Hei. 6-007967, in which a way of bonding high alloy tube for oil industry is described, putting insert material between two pieces of high alloy tubes, applying a pressure between 4.9 MPa and 19.6 MPa (0.5 kg/mm² to 2.0 kg/mm²), heating to 1200 to 1280°C and keeping the temperature longer than 120 seconds, whereas the melting point of the insert material is equal to or below 1150°C.

Further, WO97/36711 (published on 09.10.97, see corresponding EP-A-847 826 which is state of art under Article 54(3) EPC) discloses a method for bonding stainless steel in the following manner. In this method, a martensitic stainless steel or a dual phase stainless steel including not less than 9 wt% of Cr is used. A low melting point bonding material composed of a Ni-based alloy foil including not less than 50 wt% of Cr, having a melting point of not more than 1150°C and having the thickness of 10 to 80 µm is put between the bonding cross section faces of the stainless steels to be bonded. A pressure of 4.9 to 19.6 MPa (0.5 to 2 kgf/mm²) is applied while the temperature is kept between the melting point of the bonding material and that of the stainless steel for more than 120 seconds so that the heating length which becomes more than 800°C is 3 to 20 mm.

Unnecessary excessive heating causes problems with the mother material strength and in corrosion resistance. Therefore, high frequency induction heating has been popular for its partial and concentrated heating efficiency. In high frequency induction heating, because of surface effect, alternate electricity accumulates on tube surface and conducts to the inside of tube.

As described in Unexamined Japanese Patent Publication (kokai) No. Hei 6-7967, bonding at relatively low temperature as low as below 1280°C and in short time heat keeping by high frequency induction will result in a partially unbonded boundary because of the inefficient heat elevation and spread at the cross section boundary.

On the other hand, by prolonging the heating time, such an inefficient bonding could be improved, but heating the mother material too long will deteriorate it and will increase the deformations at the boundary, which would be a cause for the concentration of stress and in case of internal deformation, be an obstacle for smooth liquid flow.

Furthermore in offshore oil field tubing, an unexpected impact force may hit the tube. Up to now, there have been no considerations dealing with ways to improve the impact resistance at the bonded area.

Moreover, referring to the method disclosed in WO97/36711, the present inventors conducted a bonding test with the dual phase stainless steel (diameter: 200 mm, thickness: 20 mm) having a practical size. The following conditions were selected so as to correspond to those of WO97/36711.

As the material to be bonded, a dual phase stainless steel (JIS G3459; SUS329J1, melting point: 1420°C) including 23.0 to 28.0 wt% of Cr was used. As the low melting point bonding material, a nickel brazing material (JIS Z3265; BNi-5, melting point: 1080 to 1135°C) including 18.0 to 19.5 wt% of Cr and having the thickness of 40 µm was used. The bonding temperature was 1300°C, time for keeping the bonding temperature was 300 seconds, and the applied force was 12.3 MPa (1.25 kgf/mm²). This was the way, the bonding test was conducted.

However, the bonded body which was obtained under the above-described conditions did show extreme deformations at the bonding area, and the deformation amount of the bonding area exceeded 20 mm. Further, many cracks were observed at the surface of the bonding area.

Next, the test was conducted again with the same conditions as described above except that the bonding temperature was changed to 1200°C, which is less than the melting point of the nickel brazing material. In this case, the deformation amount of the bonding area of the bonding body thus obtained is little, and no crack was observed in the surface of the bonding area, which is thereby capable of obtaining a good coupling in view of its external appearance.

From the thus obtained dual phase stainless steel bonding coupling, four test pieces for a tensile test (length: 300 mm, width: 25.4 mm) were cut, and the tensile test was conducted. As the result of the test, all of the four test pieces were broken at the bonded boundary, and the tensile strength exhibited an extremely low value of 200 to 400 MPa. Accordingly, when applying the conditions of WO97/36711 to a dual phase stainless steel having a practical size, it was not possible to obtain good bonding coupling for practical use.

It is the object of the present invention to overcome the drawbacks and disadvantages of the prior art. This object is solved by the bonding method of independent claim 1.

Further advantageous features,. aspects and details of the invention are evident from the dependent claims, description, examples and figures. The claims are to be understood as not limited to the particular embodiments. The present invention generally relates to a dual phase stainless steel, and specifically relates to bond dual phase stainless steel tubes for oil production, for corrosion resistance of chemical plant, for conveyor of crude oil, for heat exchanger of sea water conversion and of a bonding dual phase stainless steel tube vs a dual phase stainless steel flange for the applications.

In one aspect, the present invention provides a bonding method of a dual phase stainless steel which is in case of a thick wall steel tube, capable of eliminating unbonded or insufficiently bonded parts, which produces high quality and tough bonding, and reduces excessive deformations to a minimum level and improves the impact resistivity value.

In another aspect, the present invention provides a bonding method of a dual phase stainless steel, in which even if the method is applied to the bonding of the dual phase stainless steel having a practical size, the bonding area is not excessively changed and substantially no crack is generated on the surface of the bonding area, and where the bonding area has a tensile strength equal to or more than that of the mother material.

According to the present invention, a method of bonding ferritic and austenitic dual stainless steels, comprises the steps of: putting an insert material comprising a Ni base alloy having a melting point below 1290°C between the bonding cross section faces of mother material steels comprising a dual phase stainless steel; applying a pressure force in the range of 3 MPa to 5 MPa to the bonding area; and heating the bonding area to a temperature in the range of 1290°C to the melting point of the mother material steel, and keeping the temperature for a time in the range of 30 seconds to 180 seconds.

The above mentioned and other features and aspects of the present invention are illustrated by the following drawings, in which
Fig. 1 is a schematic view of a bonding device for carrying out the bonding method of a dual phase stainless steel according to the present invention;
Fig. 2 shows a shape of a tensile strength specimen cut from the bonded joint which is produced by the bonding device'as shown in Fig. 1;
Fig. 3 shows a shape of a specimen cut from the bonded joint for Charpy impact test;
Fig. 4 is a schematic view showing a conventional mechanical coupling method; and
Fig. 5 is a schematic view showing a conventional orbital welding method.

A bonding method of the present invention comprises: putting insert material made of a nickel alloy the melting point of which is less than 1290°C between bonding cross section faces of two mother materials made of dual phase stainless steel, applying pressure to the bonding cross section faces of the mother materials in the range of 3 MPa to 5 MPa, heating the bonding cross section faces in the range of 1290°C to the melting point of the mother material, and keeping the temperature for a time in the range of 30 seconds to 180 seconds.

The dual phase stainless steel used in the present invention is e.g. SUS 329 J1, SUS 329 J3L, SUS 329 J4L or the like, but not limited thereto. The materials may have a variety of shapes including tubes, flanges, plates, blocks, etc.

The bonding temperature should preferably be between 1290°C and the melting point of the mother material. If the bonding temperature is less than 1290°C, bonding boundaries do not reach the bonding temperature, the insert material does not heat up to the melting point and the diffusion of chemical elements of the insert material does not successfully take place, thereby failing to obtain sufficient bonding toughness. If the mother material is heated to more than the melting point thereof, the mother material itself melts and fails to keep its own shape. For reference, the melting point of the mother material described above lies between 1400°C and 1450°C.

The holding time for which the bonding temperature should preferably be kept is between 30 and 180 seconds. In case less than 30 seconds are used, the diffusion of chemical elements of insert material does not successfully take place. Brazing phenomena, and an only partially bonded or un-bonded boundary may result especially at places remote from the heating device.

In case a time longer than 180 seconds is used, the mother material fails to keep its own shape or deteriorates its own strength and loses corrosion resistivity.

The application of the pressurising force should preferably be in the range between 3 MPa and 5 MPa. If the pressurising force is less than 3 MPa, the contact of boundaries of the two mother materials will be insufficient and it will fail to obtain the desired bonding strength. If the pressurising force is more than 5 MPa, the mother material will be deformed and no successful bond will be created.

The insert material for bonding dual phase stainless steel should be a Ni base alloy. By using this material for the insert material, toughness and corrosion resistivity of the bonded boundary can be kept as the same level as those of the mother materials. The insert material should have a melting point less than 1290°C. If the melting point of the insert material is higher than 1290°C, the bonding temperature will be high enough for the mother material to deform itself.

There are several ways of setting up the insert material, including thermal spraying, dipping, plating, spattering, etc. The insert material will work as a single coating layer of the Ni base alloy, or as multi-coating layers at the bonding boundary. The chemical compositions of the Ni base alloy will have a certain melting point after it is reorganized by the first stage melting. Various shapes of the insert material will work when inserted between the materials, but foil shape, fish scale shape or powder shape is most recommended due to its cost economy and ease of handling.

The thickness of the insert material, in case of foil shape, fish scale shape or powder shape, is preferably in the range of 20 µm to 100 µm when being set up at bonding boundary. If, in the case of foil, the insert material, is thinner than 20 µm it is not easy to manufacture and to handle at the workshop. In case of a fish scale or powder with thickness below 20 µm, it is not easy to obtain a uniform spread over the bonding cross section. If the insert material is thicker than 100 µm, it takes along time to achieve sufficient diffusion which will also be a cause for deformation of the mother materials, thereby deteriorating the bonding quality.

The Ni alloys used as insert material preferably includes 3 wt% ≤ Si ≤ 6 wt%, 5 wt% ≤ Cr ≤ 10 wt%, 2 wt% ≤ Fe ≤ 6 wt%, 2 wt% ≤ B ≤ 4 wt%, the residual being Ni. A thus composed Ni based alloy used as insert material improves the ferritic phase in dual phase stainless steel and also accelerates the transfer of atomic particles at the bonding boundary, which contributes to a much improved impact value.

The roughness of the bonding cross section surface should preferably be Rmax ≤ 50 µm. If Rmax is above 50 µm, some part of bonding boundary may be un-bonded due to an incomplete filling with insert material.

Inert gas provides a prefered environment atmosphere, while the dual phase stainless steel bonding can also be carried out in air or in vacuum. Bonding in air oxidizes the heated portion and deteriorates the bonding toughness. Bonding in a vacuum is difficult to be carried out in practice especially in the case of long length materials like oil tubing. An inert gas atmosphere can be generated by building a chamber which accommodates the whole bonding material and the heating device or by spraying inert gas to the heating material to shield the bonding part against the air.

There are several methods for heating the bonding cross section faces such as using a heater to radiate heat over the bonding boundary, supplying electricity to the heating materials to generate resistance heating by contact resistance with the inserted material precisely at the bonding area etc. depending upon shape, size and other conditions.

As for longitudinal material heating including steel tubes, high frequency induction heating to be used in induction heat coil is highly preferable. A high frequency induction heating device provides bonding with partial and precise spot heating at the bonding area. The frequency should preferably be below 100 kHz. The higher the frequency in high frequency induction heating, the more pronounced are the surface effects so that above 100 kHz only the surface is heated and uniform and distributed heating can not be achieved.

The bonding method of dual phase stainless steel described above uses a Ni base alloy insert material which is good at toughness and corrosion resistivity, provides better liquid diffusion bonding. It is heat efficient, requires low voltages and saves time since the whole cross section area at the boundary is heated up to the bonding temperature in a short time. The transfer of atomic particles is more efficient in addition to the effect that the deformation of the mother materials is controlled.

The insert material is preferably made of a specific chemical composition on a Ni base which works well for improving the ferritic phase in dual phase stainless steel and also accelerates the transfer of atomic particles at the bonding boundary, which contributes to a much improved impact value.

Moreover, since the bonding conditions are optimized as described above, even if the bonding method of the present invention is applied to a dual phase stainless steel having a practical size, the bonding area is not changed excessively and substantially no cracks are generated on the surface of the bonding area. It is further possible to obtain a bonding coupling having a tensile strength equal to or larger than the mother material.

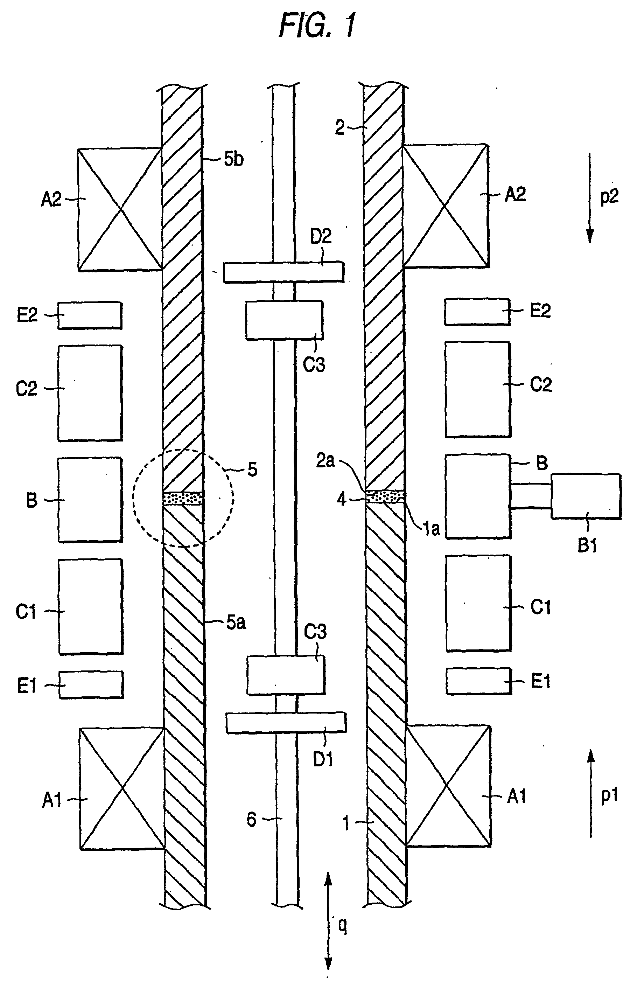

The preferred embodiments according to the present invention will be described as follows referring to the accompanying drawings. Fig. 1 shows a schematic view of a bonded device for carrying out the bonding method of a dual phase stainless steel according to the present invention. This is a bonding unit to bond steel tubes which consists of a pair of clamping mechanics A1 and A2, a heating device B, external gas discharging device C1 and C2, internal gas discharging devices C3 and C4, water cooling nozzles D1 and D2 and thermo-sensors E1 and E2.

There exists clamping devices A1 and A2 symmetrically in vertical direction, with function to clamp two tubes, 1 and 2, which hold an insert material 4 between a pair of boundary cross sections 1a and 2a. The whole bonding boundary 5 has a certain distance from each clamping device. The clamp A1, located downwards of the bonding boundary 5, holds a down side tube 1, grips the external surface and lifts the tube 1 up (arrow p1 in Fig. 1). The clamp A2, located upwards of the bonding boundary 5, holds down a tube 2, grips the external surface and moves the tube 2 down (arrow p2).

The heating device B is composed of a high frequency induction heating coil made of copper pipes, which is arranged to surround the round surface 5a of the bonding boundary 5. A coil, by way of a control panel (not shown here), is connected to a high frequency generator (not shown here), and a certain power of electricity at a certain frequency is supplied to the coil. Inside the coil, water circulates for cooling the Joule heat to keep the coil from melting.

The heating device B is furnished with a radiation thermometer B1 for measuring the temperature of the bonding boundary 5. The output terminal of the radiation thermometer B1 is connected to the control panel (not shown here) and the temperature measured by the radiation thermometer B1 is transmitted to the panel through the output terminal.

The external gas discharger C1 and C2 are installed above and underneath of the heating device B, respectively, and around the external surface 5a of the tubes 1 and 2. The function of the external gas discharger C1 and C2 is to discharge inert gas Ar, N₂ or the like, focused at the bonding boundary 5, in the direction of the external round surface of the round surface 5a, during diffusion bonding to keep the external surfaces 5a in the heating zone shielded.

Furthermore, between the clamp device A1 and the external gas discharger C1 and between the clamp device A2 and the external gas discharger C2, thermal sensors E1 and E2 are installed facing the external surfaces 5a of the tubes 1 and 2. The sensors E1 and E2 measure the temperature of the tubes 1 and 2 at diffusion bonding and define the area to be enforcedly cooled after the bonding.

Inside the tubes 1 and 2, a dual composed tube 6 is inserted from the top of tube 2. The tube 6 is provided with a pair of internal gas dischargers C3, C3 which are kept at a certain distance. A water cooling nozzle D1 is arranged under the bottom side of the lower internal gas discharger C3, and a water cooling nozzle D2 is arranged above the top side of the upper internal gas discharger C3.

The function of the pair-of internal gas dischargers C3, C3 is to discharge inert gas such as Ar, N₂, focused at the bonding boundary 5, in the direction of the internal round surfaces 5b, during diffusion bonding to keep the internal surfaces 5b in the heating zone shielded. After diffusion bonding is carried out the water cooling nozzles D1 and D2 spray cooling water or Ar gas to cool the heated zone. The cooling fluid spreads both upwards and downwards of the bonded boundary and thereby enforcedly cools the heating zone from the side of the internal surface 5b.

The dual composed tube 6 is provided with an inert gas piping (not shown here) and a coolant piping (not shown here). The inert gas piping is connected to the internal gas dischargers C3 and C3 and the coolant piping is connected to the cooling nozzles D1 and D2. By switching a valve (not shown) built in the composed tube 6, the inert gas or the coolant is discharged to the internal surface 5b of the tube.

The dual composed tube 6 can also move up and down so as to change the discharge position of the inert gas or the coolant.

The positions of the cooling nozzles D1 and D2 is not limited to the one shown in Fig. 1. Alternatively, they may be provided to surround the external surface 5a of the tube, or they may be provided both inside and outside of the tube.

Next, a method for bonding a dual phase stainless steel using the above described bonding device is described.

First, the tubes 1 and 2 are clamped by the clamp devices A1 and A2, respectively. Next, a thin foil insert material 4 composed of a Ni base alloy is put on the cross section surface 1a of the tube 1. Thereafter, the clamps 1 and 2 are operated to move the tube 1 and 2 along the direction of arrows p1 and p2, respectively, and the tubes compressedly contact to form the bonding boundary 5. Then, as it stands, the pressure in the axial direction is continuously applied to the tubes.

As for selection of insert material 4, in case of using fish scale shape or powder shape, it may be directly sprayed to the cross section surface 1a of tube 1, or a paste obtained by mixing the insert material with a solvent or binder may be applied thereto. In case of preliminary putting the insert material, by way of spraying, dipping, plating or spattering, of a single layer or multi-layers of a Ni base alloy, the chemical composition of which has a certain melting point after reorganisation following the first melting (after some atomic particles transferred), onto the cross section surface 1a and/or 2a, the tubes 1 and 2 are directly brought in contact with each other.

After preparing the tubes 1 and 2 and the insert material 4, inert gas like Ar is discharged from the external and internal gas dischargers C1, C2 and C3, C3 to provide a protective shield on the external surface 5a and the internal surface 5b of the bonding boundary 5. At the same time, cooling water is made to flow into the inductive coil of the heating device 5a, and simultaneously a high frequency is applied. Once the inductive coil is supplied with high frequency power as a furnace effect, heating progresses from the surface to the inside of tubes 1 and 2.

The temperature of the bonding boundary 5 is measured by the radiation thermometer B1. The value of the measured temperature is transmitted to a control panel (not shown here) through an output terminal and it works as a feedback to control the output of a high frequency electric power source (not shown here) to follow a preset heating pattern.

When the temperature of the bonding boundary 5 reaches the preset bonding temperature which is not less than the melting point of the insert material 4 but less than the melting point of tubes 1 and 2, then the temperature is held for a certain time (30 seconds for example) so as to sufficiently diffuse a part of the elements included in the insert material 4 into the tubes 1 and 2. After sufficiently carrying out the diffusion of the element, the heating zone around the bonding boundary 5 is cooled down, and the bonding is finished.

When it is required that the bond shows a high degree of toughness or toughness combined with corrosion resistance in such an environment like an oil field, the heat treatment is preferably carried out in the following manner. The heat zone which is heated above 300°C during bonding is rapidly cooled down immediately after the bonding. Alternatively, after once cooling down, it is heated up again above the solution temperature and thereafter it is cooled down rapidly.

The dual stainless steel is rich in chrome and contains much high chromium ferrite phase. Therefore, when it is cooled down gradually to the range between 600 and 800°C, a sigma brittleness due to sigma phase precipitation of intermetalics is formed. Moreover, at gradual cooling between 370 and 530°C, a "475°C brittleness" is formed due to producing dual phase segregation of the high chromium alpha phase and the low chromium ferrite alpha phase. These metallic conversion of phase may cause stiffness and brittleness in an area close to the bonding boundary.

Furthermore, in case of gradual cooling between 450 and 850°C, a chromium rich M₂₃C₆ might be precipitated at the boundary of grain particles and could form a Cr-evacuated zone at the boundary of the grain particles which might cause sensitizing phenomena where characteristics of grain boundary corrosion resistance or stress cracking corrosion resistance are generated. The speed of diffusion of chromium in the ferrite phase is so fast that Cr-evacuation is not generated so easily as in the case of austenitic stainless steel. However, in order to achieve a corrosion cracking resistance of the bonding which is the same as that of the mother metal, rapid cooling is highly preferred for the dual phase stainless steel bonding.

In case of rapid cooling, at the stage of bonding or at the stage of re-heating after being air cooled, the temperature of the tubes 1 and 2 is measured by the thermo-sensors E1 and E2, and the heating zone in each of tubes 1 and 2 heated above 300°C is identified. After bonding or re-heating, the dual composed tube 6 is moved upward or downward based on the positioning signal from the heating zones to choose the positions of the cooling nozzles D1 and D2. Then, the coolant such as water is discharged and sprayed to the heating zone.

The rapid cooling speed should preferably be faster than a rate of 5°C/sec and more preferably be in the range 10 to 30°C/sec. In case it is slower than 5°C/sec, sigma phase brittleness, a "475°C brittleness" and the above mentioned sensitizing cannot sufficiently be prevented.

At rapid cooling, the clamps A1 and A2 are kept in operation to apply a certain pressure in the axial direction of the tubes to the bonding boundary. At the beginning of rapid cooling, because cooling is limited to the surface of the tubes, a tensile stress is generated at the surfaces of tubes 1 and 2 with the danger of stress cracking at the bonded cross sections. However, by applying a pressure during rapid cooling, the pressing forces cancels the force leading to tensile stress cracking on the surface. Preferably the pressing force applied during rapid cooling is in the range of 5 to 10 MPa.

### EXAMPLE 1

The machine of Fig. 1 was used for bonding dual phase stainless steel.

The tube used in this example 1 has the following dimensions. The diameter of the tube was 115 mm, the wall thickness was 10 mm. Its material was SUS 329 J1 (JIS4303), a dual phase stainless steel the melting point of which is 1430°C. The roughness of the cross section surface for bonding was finished so that Rmax is not more than 15 µm. The insert material used in this example is a foil made of Ni-Si-B alloy (JIS Z3265; BNi-3) having a thickness of 30 µm and a melting point of 1050°C.

After the insert material described above was put between the bonding cross sections of the dual phase stainless steel tubes, the clamps A1 and A2 were moved to press the insert material by the two side tubes, and a pressing force of 3 MPa was applied. The bonding boundary area was gas-shielded by Ar gas. A 200 kW high frequency induction electric generator was used to apply high frequency of 3 kHz to the induction heat coil. Then, liquid phase diffusion bonding was carried out at a bonding temperature of 1290°C, with 30 seconds of holding the temperature.

### EXAMPLE 2

Fish scale shape insert material composed of Ni-Cr-Si-B alloy (JIS Z3265; BNI-5) having a thickness of 60 µm and a melting point of 1150°C, was put onto the cross section surfaces of tubes 1 and 2. High frequency power at 4 kHz was used to heat up the bonding boundary to 1300°C and the temperature was kept for 180 seconds. All other conditions were as same as in Example 1.

### EXAMPLE 3

Fish scale shape insert material composed of Ni-Cr-Si-Fe-B alloy (JIS Z3265; BNi-2) having a thickness of 40 µm and a melting point of 1040°C, was put onto the cross section surfaces of tubes 1 and 2.

High frequency power at 5 kHz was used to heat up the bonding boundary to 1295°C where the temperature was kept for 60 seconds. All other conditions were as same as in Example 1.

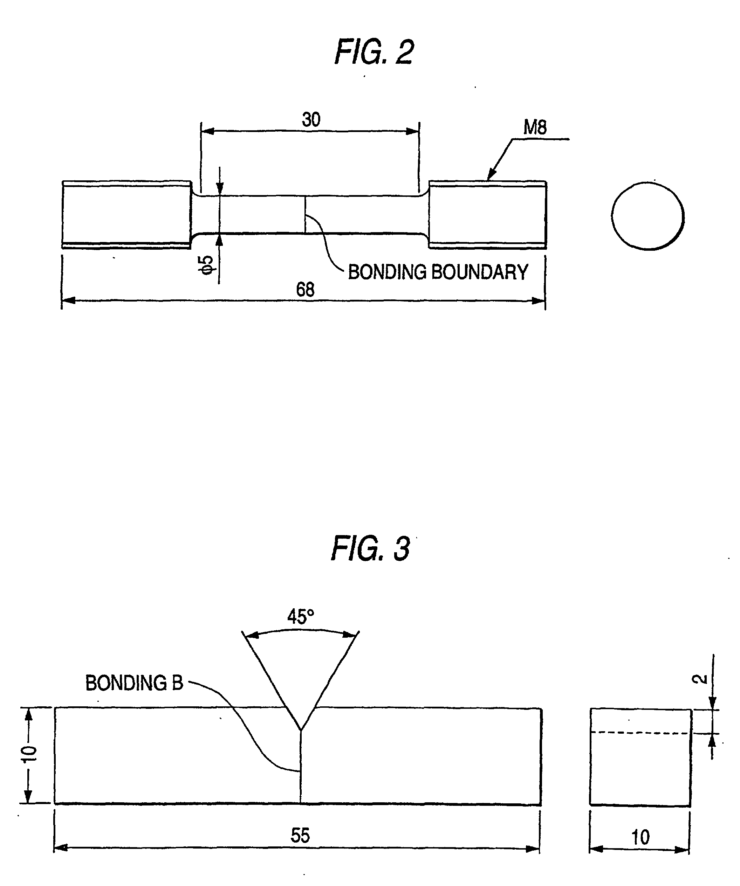

In all three application tests, a tensile strength specimen of 5 mm diameter and 68 mm length, with a bonded boundary in the middle as shown in Fig. 2, was cut off and tested for tensile strength at a cross head speed of 1 mm/min. The test results are shown in Table 1.

**Table 1**

| | Example 1 | Example 2 | Example 3 |
|---|---|---|---|
| Bonding Condition | | | |
| Insert Material | | | |
| Type | thin foil | fish scale | powder |
| Composition | Ni-Si-B (BNi-3) | Ni-Cr-Si-B (BNi-5) | Ni-Cr-Si-Fe-B (BNi-2) |
| Melting point (°C) | 1050 | 1150 | 1040 |
| Thickness (µm) | 30 | 60 | 40 |
| Frequency (kHz) | 3 | 4 | 5 |
| Bonding Temperature (°C) | 1290 | 1300 | 1295 |
| Holding Time (sec) | 30 | 180 | 60 |
| Pressing Force (MPa) | 3 | 3 | 4 |

| Shielding Gas | | | |
|---|---|---|---|
| Out Side | Ar | Ar | He |
| In Side | Ar | Ar | He |

| Tensile Test | | | |
|---|---|---|---|
| Tensile Strength (MPa) | 820 | 816 | 823 |
| Position of Rupture | Mother Material | Mother Material | Mother Material |
| Evaluation | o | o | o |

None of the three specimens had cracks at the bonded boundary. No deformation was found and the quality was acceptable. The tensile strength of each of Examples 1, 2 and 3 were 820, 816 and 823 MPa respectively. None of the three were broken at the bonded boundary but were broken in the mother material.

### COMPARATIVE EXAMPLE 1

The insert material used in this comparative example 1 is a foil having 30 µm thickness and a melting point of 1190°C and is composed of a Fe-Si-B alloy with 4.6 wt% Si, 2.8 wt% B with the residual being Fe. The diffusion bonding of the dual phase stainless steel was carried out under conditions of a pressing load of 4 MPa, a keeping time of the temperature of 120 seconds with the other conditions identical to Example 1.

### COMPARATIVE EXAMPLE 2

The insert material used in this comparative example 2 is powder having 50 µm thickness and a melting point of 1150°C, and is composed of a Ni-Cr-Si-B alloy (JIS Z3265; BNi-5). The diffusion bonding of the dual phase stainless steel was carried out under conditions of a pressing load of 4 MPa, a bonding temperature of 1280°C, keeping the temperature for 120 seconds, using helium as shield gas with the other conditions identical to Example 1.

### COMPARATIVE EXAMPLE 3

The insert material used in this comparative example 3 is a thin foil having 30 µm thickness and a melting point of 1150°C composed of a Ni-Cr-Si-B alloy (JIS Z3265; BNi-5). The diffusion bonding of the dual phase stainless steel was carried out under conditions of a pressing load of 4 MPa, a bonding temperature of 1300 °C, keeping the temperature for 20 seconds, with the other conditions being identical to Example 1.

### COMPARATIVE EXAMPLE 4

The insert material used in this comparative example 4 is a foil having 30 µm thickness and a melting point of 1150°C and is composed of a Ni-Cr-Si-B alloy (JIS Z3265; BNi-5). The diffusion bonding of the dual phase stainless steel was carried out under conditions of a pressing load of 4 MPa, a bonding temperature of 1300°C, keeping the temperature for 210 seconds, with the other conditions identical to Example 1.

### COMPARATIVE EXAMPLE 5

The insert material used in this comparative example 5 is a foil having 30 µm thickness and a melting point of 1150°C and is composed of a Ni-Cr-Si-B alloy (JIS Z3265; BNi-5). The diffusion bonding of the dual phase stainless steel was carried out under conditions of a pressing load of 2 MPa, a bonding temperature of 1300°C, keeping the temperature for 120 seconds, with the other conditions identical to Example 1.

### COMPARATIVE EXAMPLE 6

The insert material used in this comparative example 6 is a foil having 30 µm thickness and a melting point of 1150°C and is composed of a Ni-Cr-Si-B alloy (JIS Z3265; BNi-5). The diffusion bonding of the dual phase stainless steel was carried out under conditions of a pressing load of 6 MPa, a bonding temperature of 1300 °C, keeping the temperature for 120 seconds, with the other conditions identical to Example 1.

For the comparative examples 1 through 6, a test specimen was cut off for the tensile strength test in the same manner as for Examples 1 through 3. The results are shown in table 2.

**Table 2**

| | Comp. Ex.1 | Comp. Ex.2 | Comp. Ex.3 | Comp. Ex.4 | Comp. Ex.5 | Comp. Ex.6 |
|---|---|---|---|---|---|---|
| Bonding Condition | | | | | | |
| Insert Material | | | | | | |
| Type | thin foil | powder | thin foil | thin foil | thin foil | powder |
| Composition | Fe-Si-B | Ni-Cr-Si-B (BNi-5) | Ni-Cr-Si-B (BNi-2) | Ni-Cr-Si-B (BNi-5) | Ni-Cr-Si-B (BNi-5) | Ni-Cr-Si-B (BNi-5) |
| Melting point (°C) | 1190 | 1150 | 1150 | 1150 | 1150 | 1150 |
| Thickness (µm) | 30 | 50 | 30 | 30 | 30 | 30 |
| Frequency (kHz) | 3 | 3 | 3 | 3 | 3 | 3 |
| Bonding Temperature (°C) | 1290 | 1280 | 1300 | 1300 | 1300 | 1300 |
| Holding Time (sec) | 120 | 120 | 20 | 210 | 120 | 120 |
| Pressing Force (MPa) | 4 | 4 | 4 | 4 | 2 | 6 |

| Shielding Gas | | | | | | |
|---|---|---|---|---|---|---|
| Out Side | Ar | He | Ar | Ar | Ar | Ar |
| In Side | Ar | He | Ar | Ar | Ar | Ar |

| Tensile Test | | | | | | |
|---|---|---|---|---|---|---|
| Tensile Strength (MPa) | 580 | 673 | 638 | 716 | 563 | 771 |
| Position of Rupture | Interface | Interface | Interface | Interface | Interface | Interface |
| Evaluation | × | × | × | × | × | Δ |

In Comparative Example 1, where a Fe base alloy instead of a Ni base alloy was used for the insert material, no cracks and no deformation is observed but the tensile strength has decreased to 580 MPa and the specimen was broken at the bonded boundary.

In Comparative Example 2, where the bonding temperature was 1280°C, no cracks and no deformation is observed either, but the tensile strength was only 673 MPa and the specimen was broken at the bonded boundary. An inspection of the broken cross section of the specimen showed an unmelted part of the insert material.

In Comparative Example 3, where the temperature keeping time was 20 seconds, and in Comparative Example 4 where it was 210 seconds, the tensile strength was 638 MPa and 716 MPa respectively. Both of tensile strength specimen were broken at the bonded boundary.

An inspection of the structure of the insert material of Comparative Example 3 was carried out by EPMA which showed that the structure after the bonding was almost the same as before bonding, which means that almost no diffusion of atomic particles has taken place. In case of Comparative Example 4, because the keeping time was too long, a portion of the tube near the bonded boundary was deformed like a barrel and cracks at the bonded boundary were observed.

In Comparative Example 5 where the bonding pressure was 2 MPa, and in Comparative Example 6 where the bonding pressure was 6 MPa, the result of the tensile strength was 563 MPa and 771 MPa respectively. Both of the specimens were broken at the bonded boundary. An inspection of the broken cross section of the specimen of the comparative example 5 showed an unbonded part, presumably because of the too small bonding pressure. In Comparative Example 6, an inspection showed that a part of the tube near the bonded boundary was deformed in the shape of a barrel and cracks at the bonded boundary were observed, presumably because of a too large bonding pressure loaded.

From the results of the above comparison tests, as for the insert material, Ni-base material was better than Fe-base in bounding toughness. As for the bonding temperature, time of keeping the bonding temperature and the bonding pressure, it was recognized that there are some optimum parameters where deformation of the bonded material is well controlled, ideal diffusion is carried out and no unbonded part is produced.

### EXAMPLE 4

The bonding device of Fig. 1 was used for dual phase stainless steel bonding.

The dual phase stainless steel used in this Example is SUS 329 JI (JIS 4303) having a diameter of 115 mm, a wall thickness of 10 mm and a melting point of 1430 °C. The surface roughness of the cross section of the bonding tubes is Rmax ≤ 15 µm. The insert material is composed of a Ni-Cr-Si-B alloy (JIS Z3265; BNi-5) having a melting point of 1150 °C and a thickness of 20 µm.

The insert material described above was put on the cross section surfaces of the dual phase stainless steel tubes, the clamps A1 and A2 clamped to hold the insert material between two tubes and a pressure of 3 MPa was applied. Then both to the bonding boundary and to the area close thereto high frequency power at 3 kHz was applied. They were shielded by N₂ gas, and heated up to 1350 °C where the temperature was kept for 60 seconds. Under these conditions, the liquid phase diffusion bonding of the dual phase stainless steel was carried out.

### EXAMPLE 5

Example 5 was carried out with the same conditions as Example 4 except that the insert material was 100 µm thin foil, the bonding pressure was 4 MPa and the shield gas was Ar.

### COMPARATIVE EXAMPLE 7

Comparative Example 7 was carried out with the same conditions as above except that the insert material was metal powder, 10 µm thick, the insert material was composed of a Ni-Cr-Si-B alloy (JIS Z3265; BNi-5), the bonding pressure was 4 MPa, the shield gas was Ar, and the temperature keeping time was 120 seconds.

### COMPARATIVE EXAMPLE 8

Comparative Example 8 was carried out with the same conditions as above except that the insert material was a 150 µm thick foil, the bonding pressure was 4 MPa, shield gas was Ar, and the temperature keeping time was 120 seconds.

From the bonded joints obtained in Examples 4 and 5, and Comparative Examples 7 and 8, the tensile strength. test specimens were cut off and were tested, following the same process as for Example 1 through 3.

The results are shown in Table 3.

**Table 3**

| | Example 4 | Example 5 | Comp. Ex. 7 | Comp. Ex. 8 |
|---|---|---|---|---|
| Bonding Condition | | | | |
| Insert Material | | | | |
| Type | thin foil | thin foil | powder | thin foil |
| Composition | Ni-Cr-Si-B (BNi-5) | Ni-Cr-Si-B (BNi-5) | Ni-Cr-Si-B (BNi-5) | Ni-Cr-Si-B (BNi-5) |
| Melting point (°C) | 1150 | 1150 | 1150 | 1150 |
| Thickness (µm) | 20 | 100 | 10 | 150 |
| Frequency (kHz) | 3 | 3 | 3 | 3 |
| Bonding Temperature (°C) | 1350 | 1350 | 1350 | 1350 |
| Holding Time (sec) | 60 | 60 | 120 | 120 |
| Pressing Force (MPa) | 3 | 4 | 4 | 4 |

| Shielding Gas | | | | |
|---|---|---|---|---|
| Out Side | N₂ | Ar | Ar | Ar |
| In Side | N₂ | Ar | Ar | Ar |

| Tensile Test | | | | |
|---|---|---|---|---|
| Tensile Strength (MPa) | 819 | 817 | 689 | 625 |
| Position of Rupture | Base Metal | Base Metal | Interface | Interface |
| Evaluation | o | o | × | × |

When the thickness of the insert material was 20 µm and 100 µm in Examples 4 and 5 respectively, no cracks and no deformation was observed and the quality was acceptable. The tensile strength of bonded joints was 819 MPa and 817 MPa respectively, and the specimens were broken at the mother material. On the other hand in Comparative Example 7 and 8, where the thickness of the insert material was 10 µm and 150 µm respectively, the tensile strength was 689 MPa and 625 MPa respectively and both specimens were broken at the bonded boundary.

An inspection of the broken cross section in Comparative Example 7 showed some unbonded parts presumably caused by insufficient diffusion of the metal powder.

An inspection of the structure of the insert material by EPMA in Comparative Example 8 showed almost no transformation at center part of the structure and it was almost in the same condition as before bonding. Diffusion was identified to be insufficient.

From the above observation of the results, in order to avoid unbonded parts, to obtain sufficient diffusion and to produce strong enough bonded joints, it was found that the thickness of the insert material has to be controlled in a certain range.

### EXAMPLE 6

The diffusion bonding of the dual phase stainless steel tube was carried out by using the bounding device as shown in Fig. 1, under the following conditions. The bonding tube has a diameter of 180 mm, a thickness of 15 mm, and is composed of dual phase stainless tube SUS 329J1 (JIS 4303). The insert material is composed of 2 wt% Si, 4 wt% Cr, 1 wt% Fe, 1 wt% B, the residual being Ni and has a melting point of 1250 °C and a thickness of 40 µm.

The insert material described above was put on the cross section surfaces of the dual phase stainless steel tubes, the clamp A1 and A2 moved to hold insert material between two tubes and a pressure of 4 MPa was applied. Then both the bonding boundary and the area close thereto were subjected to high frequency power of 3 kHz. They were shielded by Ar gas, and heated up to 1300 °C where the temperature was kept for 60 seconds.

### EXAMPLE 7

Example 7 was carried out under the same conditions as Example 6 except that the insert material is a thin foil composed of 3 wt% Si, 5 wt% Cr, 2 wt% Fe, 2 wt% B, the residual being Ni, the insert material having a melting point of 1210 °C, and a thickness of 40 µm. The bonding temperature is 1290 °C, and the time of keeping the bonding temperature is 120 seconds.

### EXAMPLE 8

Example 8 was carried out under the same conditions as Example 6 except that the insert material is a thin foil composed of 6 wt% Si, 10 wt% Cr, 5 wt% Fe, 4 wt% B, the residual being Ni, having a melting point of 1030 °C and a thickness of 40 µm. The bonding temperature is 1350 °C and the time of keeping the bonding temperature is 120 seconds.

### EXAMPLE 9

Example 9 was carried out under the same conditions as Example 6 except that the insert material is a thin foil composed of 7 wt% Si, 15 wt% Cr, 6 wt% Fe, 4 wt% B, the residual being Ni, the insert material having a melting point of 1040 °C, and a thickness of 40 µm. The bonding temperature is 1290°C, the time of keeping the bonding temperature is 120 seconds and the shield gas is He.

### EXAMPLE 10

Example 10 was carried out under the same conditions as Example 6 except that the insert material is a thin foil composed of 4 wt% Si, 3 wt% B, the residual being Ni, the insert material having a melting point of 1050 °C and a thickness of 30 µm. The bonding temperature is 1290 °C, the time of keeping the bonding temperature is 30 seconds, and the bonding pressure is 3 MPa.

### EXAMPLE 11

Example 11 was carried out under the same conditions as Example 6 except that the insert material is a thin foil composed of 10 wt% Si, 18 wt% Cr, the residual being Ni, having a melting point of 1150°C and a thickness of 20 µm. The bonding temperature is 1350 °C, the bonding pressure is 3 MPa and the shield gas is N₂.

From the results obtained in Examples 6 through 11, tensile strength test specimens were cut off in the same process as in Example 1 through 3 to carry out the test. Impact value test specimens were also cut off bonded joints shown in Fig. 3 as per JIS Z2202 No. 5 specimen to carry out a Charpy notch toughness test at a temperature of 0°. Results are shown in Table 4.

**Table 4**

| | Ex.6 | Ex.7 | Ex.8 | Ex.9 | Ex.10 | Ex.11 |
|---|---|---|---|---|---|---|
| Bonding Condition | | | | | | |
| Insert Material | | | | | | |
| Type | thin foil | thin foil | thin foil | thin foil | thin foil | thin foil |

| Composition | | | | | | |
|---|---|---|---|---|---|---|
| Si | 2 | 3 | 6 | 7 | 4 | 10 |
| Cr | 4 | 5 | 10 | 15 | 0 | 18 |
| Fe | 1 | 2 | 5 | 6 | 0 | 0 |
| B | 1 | 2 | 4 | 4 | 3 | 0 |
| Ni | Bal. | Bal. | Bal. | Bal. | Bal. | Bal. |
| Melting point (°C) | 1250 | 1210 | 1030 | 1040 | 1050 | 1150 |
| Thickness (µm) | 40 | 40 | 40 | 40 | 30 | 20 |
| Frequency (kHz) | 3 | 3 | 3 | 3 | 3 | 3 |
| Bonding Temperature (°C) | 1300 | 1290 | 1350 | 1290 | 1290 | 1350 |
| Holding Time (sec) | 60 | 120 | 120 | 120 | 30 | 60 |
| Pressing Force (MPa) | 4 | 4 | 4 | 4 | 3 | 3 |

| Shielding Gas | | | | | | |
|---|---|---|---|---|---|---|
| Out Side | Ar | Ar | Ar | He | Ar | N ₂ |
| In Side | Ar | Ar | Ar | He | Ar | N ₂ |

| Tensile Test | | | | | | |
|---|---|---|---|---|---|---|
| Tensile Strength (MPa) | 813 | 829 | 823 | 810 | 820 | 819 |
| Position of Rupture | Base Metal | Base Metal | Base Metal | Base Metal | Base Metal | Base Metal |
| Impact Test (vEo: J) | 32 | 72 | 69 | 38 | 25 | 22 |
| Evaluation | o | Δ | Δ | o | o | o |

The tensile strength tests of the specimens from Examples 6 through 11 showed more than 800 MPa and the specimens were broken at the mother material. As for the impact value test, bonded joints obtained from Example 7 and 8 showed as high as 72 J and 69 J respectively, but Examples 6, 9, 10 and 11 showed as low as 32 J, 38 J, 25 J and 22 J respectively.

From the observation of the microstructure of the area near the bonded boundary, the bonded joints obtained from Example 7 and 8 showed a wave shape or a crossing-each-other shape at the boundary of the ferrite phase of the dual phase stainless steel and the insert material. On the other hand, the bonded joints obtained from Examples 6, 9, 10 and 11 showed just flat or straight line boundaries between the two materials.

From the above results, the insert material should be properly designed Ni base chemical component for controlling the microscopic shape at the boundary between the ferrite phase of the dual phase stainless steel and the insert material. This improves the quality of bonding including the impact value as well as the tensile strength.

### EXAMPLE 12

A diffusion bonding of the dual phase stainless steel tube was carried out by using bonding device shown in Fig. 1 in the following conditions. The tube has a diameter of 180 mm, a thickness of 15 mm, and is composed of the dual phase stainless steel tube SUS 329J1 (JIS 4303) having a melting point of 1410 °C. The surface roughness of the bonding cross section is Rmax = 50 µm. The insert material is composed of Ni-Cr-Si-B alloy (JIS Z3265; BNi-5) having a melting point of 1150 °C and a thickness of 40 µm.

The insert material is put onto the cross section surfaces of the dual phase stainless steel tubes, the clamps A1 and A2 move to hold the insert material by the two tubes and a pressure of 4 MPa was applied to the bonding boundary. Then, the boundary and the area near the boundary were subjected to 3 kHz high frequency power to heat up the bonding temperature of 1300 °C and to keep the temperature for 180 seconds. The dual phase stainless steel bonding was carried out under these conditions.

### EXAMPLE 13

Example 13 was carried out in the same manner as Example 12 except that the surface roughness of the bonding cross section is Rmax = 30 µm and time of keeping the bonding temperature is 120 seconds.

### COMPARATIVE EXAMPLE 9

Comparative Example 9 was carried out in the same manner as Example 12 except that the surface roughness of the bonding cross section is Rmax = 120 µm and time of keeping the bonding temperature is 60 seconds.

Specimens for tensile strength testing were cut off the bonded joints of Examples 12 and 13, and Comparative Example 9 in the same process as for Example 1 through 3. The results of the tensile strength test are shown in table 5.

**Table 5**

| | Example 12 | Example 13 | Comp. Ex. 9 |
|---|---|---|---|
| Bonding Condition | | | |
| Insert Material | | | |
| Type | thin foil | thin foil | thin foil |
| Composition | Ni-Cr-Si-B (BNi-5) | Ni-Cr-Si-B (BNi-5) | Ni-Cr-Si-B (BNi-5) |
| Melting point (°C) | 1150 | 1150 | 1150 |
| Thickness (µm) | 40 | 40 | 40 |
| Roughness of surface (Rmax: µm) | 50 | 30 | 120 |
| Frequency (kHz) | 3 | 3 | 3 |
| Bonding Temperature (°C) | 1300 | 1300 | 1300 |
| Holding Time (sec) | 180 | 120 | 60 |
| Pressing Force (MPa) | 4 | 4 | 4 |

| Shielding Gas | | | |
|---|---|---|---|
| Out Side | Ar | Ar | Ar |
| In Side | Ar | Ar | Ar |

| Tensile Test | | | |
|---|---|---|---|
| Tensile Strength (MPa) | 822 | 823 | 559 |
| Position of Rupture | Base Metal | Base Metal | Interface |
| Evaluation | o | o | × |

In Examples 12 and 13 where the surface roughness of bonding cross section was Rmax 50 µm and 30 µm respectively, an ideal bonding was obtained without any cracks and deformation. The tensile strength were 822 MPa and 823 MPa respectively and the specimens were broken at the mother material. On the other hand, in Comparative Example 9 in which the surface roughness of the bonding cross section was Rmax = 120 µm, although no cracking or deforming in the mother material occured, the tensile strength value was only 559 MPa. The specimen was broken at the bonded boundary.

In Comparative Example 9, the broken cross section of the bonded joint showed a partially unbonded area at the broken surface. Accordingly, it is necessary to control Rmax to be under a certain value to achieve full contact of the cross sections and to produce high quality bonding.

### EXAMPLE 14

A diffusion bonding of the dual stainless steel tube was carried out by using the bonding device shown in Fig. 1 in the following conditions. The tube has a diameter of 180 mm, a thickness of 15 mm and is composed of the dual phase stainless steel SUS 329J1 (JIS 4303) having a melting point of 1440 °C, and the surface roughness of the bonding cross section is Rmax ≤ 15 µm. The insert material is a powder composed of Ni-Cr-Si-B alloy (JIS Z3265; Bni-5) having a melting point of 1150 °C.

This Ni-base metal powder is put onto the cross section surface of the dual phase stainless steel tube as thick as 40 µm, the clamps A1 and A2 move to hold the insert material by the two tubes and a pressure of 4 MPa was applied to the bonding boundary. Then, the boundary and the area near the boundary was shielded by Ar gas and subjected to 100 kHz high frequency power to heat up to the bonding temperature of 1300 °C, and to keep the temperature there for 180 seconds. The dual phase stainless steel bonding was carried out under these conditions.

### COMPARATIVE EXAMPLE 10

Comparative Example 10 was carried out in the same manner as Example 14 except that the insertion material is a thin foil having a thickness of 40 µm, the frequency is 3 kHz, the time of keeping the bonding temperature is 120 seconds, and the gas shield was not carried out.

### COMPARATIVE EXAMPLE 11

Comparative Example 11 was carried out in the same manner as Example 14 except that the insert material is a foil having the thickness of 40 µm, the frequency is 200 kHz, and the time of keeping the bonding temperature is 60 seconds.

Specimens for tensile strength testing were cut off the bonded joints of Example 14 and Comparative Example 10 and 11 in the same process as for Example 1 through 3. The results of the tensile strength test are shown in Table 6.

**Table 6**

| | Example 14 | Comp. Ex.10 | Comp. Ex.11 |
|---|---|---|---|
| Bonding Condition | | | |
| Insert Material | | | |
| Type | powder | thin foil | thin foil |
| Composition | Ni-Cr-Si-B (BNi-5) | Ni-Cr-Si-B (BNi-5) | Ni-Cr-Si-B (BNi-5) |
| Melting point (°C) | 1150 | 1150 | 1150 |
| Thickness (µm) | 40 | 40 | 40 |
| Frequency (kHz) | 100 | 3 | 200 |
| Bonding Temperature (°C) | 1300 | 1300 | 1300 |
| Holding Time (Sec) | 180 | 120 | 60 |
| Pressing Force (MPa) | 4 | 4 | 4 |

| Shielding Gas | | | |
|---|---|---|---|
| Out Side | Ar | Non | Ar |
| In Side | Ar | Non | Ar |

| Tensile Test | | | |
|---|---|---|---|
| Tensile Strength (MPa) | 819 | 577 | 597 |
| Position of Rupture | Base Metal | Interface | Interface |
| Evaluation | o | × | × |

In Example 14, where the frequency of the high frequency power applied to the induction coil was 100 kHz and Ar gas shielding was carried out, high quality bonding with no cracking and no deformation was observed. The tensile strength was 819 MPa and the specimen was broken at the mother material. On the other hand, in Comparative Example 10 in which the gas shielding was not carried out, the tensile strength was 577 MPa and the specimen was broken at the bonded boundary. An inspection of the broken cross section showed oxides on the cross section surface.

In Comparative Example 11 where the frequency was 200 kHz and Ar gas shielding was carried out, the tensile strength was 597 MPa and-the specimen was broken at the bonded boundary. An inspection of the broken cross section showed residuals of the insert material on the external surface and the insert material unmelted on the internal surface side.

From the results above, it was recognized that the inert gas shield is a desirable condition to keep the bonding cross section clean and for achieving bonding with high quality. High frequency induction heating also demands a certain proper frequency, too high a frequency was a reason for the lack of uniform heating.

In view of the above tests, it is possible to obtain a bonding body having the same strength as the mother material in accordance with the following factors. The optimum conditions for making a high quality bonding of the dual phase stainless steel is to select a Ni-base insert material, relatively high temperature, low pressure, short time bonding and a well controlled thickness of the insert material in comparison with the conventional process. Further, it is desirable to control the roughness of the cross section surface, to keep off air by gas shielding and to optimize the bonding condition such as the bonding atmosphere. The Nickel based alloy used as the insert material which is in the specific composition range can improve the impact value of the bonding body significantly.

Further, as described above, it has been recognized that, even if the bonding method as described above according to the present invention is applied to a dual phase stainless tube having a practical size, the bonding portion is not excessively deformed there are no cracks generated on the surface of the bonding portion and a good bonding coupling for practical use is obtained.

The present invention is not limited by the above Examples. Further applications of the invention can be deduced from the experimental results. For example, bonding of tube vs flange dual structure tube bonding, plate vs plate, lap joint, T joints and any other shape material bonding is practical by the present invention.

In the dual phase stainless steel bonding of the above Examples, SUS 329JI was often used, but other dual phase stainless steels including SUS 329 J3L and SUS 329 J4L, also modified with several chemical contents can be used in this invention.

As a cooling method in addition to normal air or water cooling, impulsive rapid cooling by a powerful nozzle was identified as being good for keeping the grain boundary corrosion resistance and the stress corrosion resistance quality as high as those of the mother materials. Shot blast after bonding was identified as being good for an improvement of the tensile strength and fatigue strength.

In the bonding of dual phase stainless steel of the present invention, compared with the conventional method, high temperature, low bonding pressure short time as well as the thickness of the insert material and the roughness of the bonding surface were optimized from a practical production point of view. Thereby, unbonded portions, deformations and other inconveniences were minimized and a high quality standard bonding process was established.

A Ni-base insert material in some chemical combination was identified as ideal to improve the boundary structure of ferrite phase/insert material, therefore the impact value of the bonding was enormously enhanced.

Further, even if the bonding method according to the present invention is applied to a dual phase stainless steel having a practical size, there is no possibility to excessively deform the bonding area and to generate cracks on the surface of the bonding portion. It is further possible to obtain- a bonding coupling having a tensile strength equal to or more than that of the mother material. Accordingly, if applied to an oil tubing, it is possible to improve the working efficiency of excavating an oil field and to reduce the cost for excavating it. Therefore, the present invention is an extremely effective invention for the industry.

## Claims

1. A method of bonding ferritic and austenitic dual stainless steels, comprising the steps of :
putting an insert material comprising a Ni base alloy having a melting point below 1290°C between the bonding cross section faces of mother material steels comprising a dual phase stainless steel;
applying a pressure force in the range of 3 MPa to 5 MPa to the bonding area; and
heating the bonding area to a temperature in the range of 1290°C to the melting point of the mother material steel, and keeping the temperature for a time in the range of 30 seconds to 180 seconds.

2. The bonding method according to claim 1, wherein the Ni base alloy has the shape of thin foil, fish scale or powder, and the insert material has a thickness in the range of 20 µm to 100 µm in the condition in which the insert material is put between the bonding cross section surfaces.

3. The bonding method according to claim 1 or 2, wherein the Ni base alloy has a composition of 3 wt% ≤ Si ≤ 6 wt%, 5 wt% ≤ Cr ≤ 10wt%, 2wt% ≤ Fe ≤ 6 wt%, 2 wt% ≤ B ≤ 4wt%, the residual being nickel.

4. The bonding method according to any of the preceeding claims, wherein the surface roughness of the bonding cross section face of the mother material steel is Rmax ≤ 50 µm.

5. The bonding method according to any of the preceeding claims, wherein the bonding of the mother material steels is performed in an atmosphere of inert gas.

6. The bonding method according to any of the preceeding claims, wherein the bonding of the mother material steels is performed with high frequency induction heating whereby the frequency is equal to or less than 100kHz.

7. The bonding method according to any of the preceeding claims, further comprising the step of rapidly cooling a heat zone which is heated above 300°C during bonding immediately after the heating step.

8. The bonding method according to any of the preceeding claims, further comprising the steps of:
after once cooling down the bonding area, heating the bonding area up again above the solution temperature; and
rapidly cooling down the bonding area.

9. The bonding method according to claim 7 or 8, wherein the rapid cooling speed is equal to or faster than 5°C/sec.

10. The bonding method according to any of claims 7 to 9, wherein the rapid cooling speed is in the range of 10 to 30°C/sec.

## Patentansprüche

1. Verfahren zum Verbinden von ferritischen und austenitischen Doppeledelstählen, die Schritte umfassend:
Einsetzen eines Einfügematerials, welches eine Legierung auf Nickelbasis mit einem Schmelzpunkt unterhalb von 1290°C umfasst, zwischen die Verbindungsquerschnittsflächen von Ausgangsmaterialstählen, welche einen Doppelphasenedelstahl umfassen;
Ausüben einer Druckkraft auf die Verbindungsfläche im Bereich von 3 MPa bis 5 MPa; und
Erhitzen der Verbindungsfläche auf eine Temperatur im Bereich von 1290°C bis zum Schmelzpunkt des Ausgangsmaterialstahls, und Halten der Temperatur für eine Zeit im Bereich von 30 Sekunden bis 180 Sekunden.

2. Verbindeverfahren nach Anspruch 1, worin die Legierung auf Nickelbasis die Form einer dünnen Folie, Fischschuppen oder Pulver aufweist, und das Einfügematerial eine Dicke im Bereich von 20 µm bis 100 um in dem Zustand aufweist, in welchem das Einfügematerial zwischen die Verbindungsquerschnittsflächen eingefügt wird.

3. Verbindeverfahren nach Anspruch 1 oder 2, worin die Legierung auf Nickelbasis eine Zusammensetzung von 3 Gew.% ≤ Si ≤ 6 Gew.%, 5 Gew.% ≤ Cr ≤ 10 Gew.%, 2 Gew.% ≤ Fe ≤ 6 Gew.%, 2 Gew.% ≤ B ≤ 4 Gew.% aufweist, wobei der Rest Nickel ist.

4. Verbindeverfahren nach einem der vorangehenden Ansprüche, wobei die Oberflächenrauhigkeit der Verbindungsquerschnittsfläche des Ausgangsmaterialstahls Rmax ≤ 50 µm beträgt.

5. Verbindeverfahren nach einem der vorangehenden Ansprüche, wobei das Verbinden der Ausgangsmaterialstähle in einer Inertgasatmosphäre durchgeführt wird.

6. Verbindeverfahren nach einem der vorangehenden Ansprüche, wobei das Verbinden der Ausgangsmaterialstähle mit Hochfrequenzheizen ausgeführt wird, wobei die Frequenz gleich oder weniger als 100 kHz ist.

7. Verbindeverfahren nach einem der vorangehenden Ansprüche, weiter umfassend den Schritt schnellen Abkühlens einer Heizzone, welche auf über 300°C während des Verbindens aufgeheizt wird, und zwar sofort nach dem Heizschritt.

8. Verbindeverfahren nach einem der vorangehenden Ansprüche, weiter umfassend die Schritte:
nach Herunterkühlen der Verbindungsfläche, nochmaliges Aufheizen der Verbindungsfläche auf oberhalb der Lösungstemperatur; und
schnelles Abkühlen der Verbindungsfläche.

9. Verbindeverfahren nach Anspruch 7 oder 8, wobei die Rate des schnellen Abkühlens gleich oder schneller als 5°C/Sekunde ist.

10. Verbindeverfahren nach einem der Ansprüche 7 bis 9, wobei die Rate des schnellen Abkühlens im Bereich von 10 bis 30°C/Sekunde liegt.

## Revendications

1. Procédé de liaison d'aciers inoxydables doubles ferritiques et austénitiques, comprenant les étapes suivantes :
la disposition d'un matériau rapporté contenant un alliage à base de nickel ayant une température de fusion inférieure à 1 290 °C entre les faces de sections de liaison d'aciers formant les matériaux mères comprenant un acier inoxydable à double phase,
l'application d'une force de pression comprise entre 3 et 5 MPa à la surface de liaison, et
le chauffage de la surface de liaison à une température comprise entre 1 290 °C et la température de fusion de l'acier formant le matériau mère, et le maintien de la température pendant un temps compris entre 30 et 180 s.

2. Procédé de liaison selon la revendication 1, dans lequel l'alliage à base de nickel a la forme d'une feuille mince, d'écailles de poisson ou d'une poudre, et le matériau rapporté a une épaisseur comprise entre 20 et 100 µm dans l'état dans lequel le matériau rapporté est placé entre les faces de sections de liaison.

3. Procédé de liaison selon la revendication 1 ou 2, dans lequel l'alliage à base de nickel a une composition telle que 3 % en poids ≤ Si ≤ 6 % en poids, 5 % en poids ≤ Cr ≤ 10 % en poids, 2 % en poids ≤ Fe ≤ 6 % en poids, 2 % en poids ≤ B ≤ 4 % en poids, le reste étant du nickel.

4. Procédé de liaison selon l'une quelconque des revendications précédentes, dans lequel la rugosité de surface d'une face de sections de liaison d'acier formant le matériau mère est telle que Rmax ≤ 50 µm.

5. Procédé de liaison selon l'une quelconque des revendications précédentes, dans lequel la liaison des aciers formant les matériaux mères est réalisée en atmosphère de gaz inerte.

6. Procédé de liaison selon l'une quelconque des revendications précédentes, dans lequel la liaison des aciers formant les matériaux mères est réalisée par chauffage par induction à haute fréquence dont la fréquence est inférieure ou égale à 100 kHz.

7. Procédé de liaison selon l'une quelconque des revendications précédentes, comprenant en outre une étape de refroidissement rapide d'une zone de chauffage qui est chauffée au-delà de 300 °C pendant la liaison juste après l'étape de chauffage.

8. Procédé de liaison selon l'une quelconque des revendications précédentes, comprenant en outre les étapes suivantes :
après un refroidissement de la surface de liaison, le chauffage à nouveau de la surface de liaison au-delà de la température de mise en solution, et
le refroidissement rapide de la surface de liaison.

9. Procédé de liaison selon la revendication 7 ou 8, dans lequel la vitesse de refroidissement rapide est au moins égale à 5 °C/s.

10. Procédé de liaison selon lune quelconque des revendications 7 à 9, dans lequel la vitesse de refroidissement rapide est comprise entre 10 et 30 °C/s.
